# EUROPÄISCHE PATENTSCHRIFT

(11) **EP 1 297 907 B1**
(45) Veröffentlichungstag und Bekanntmachung des Hinweises auf die Patenterteilung: **22.02.2006**
(21) Anmeldenummer: 02015291.4
(22) Anmeldetag: 09.07.2002
(51) Int. Cl.: B08B 9/00, A47J 36/06

(54) **Deckel für Gargerät mit Reinigungsvorrichtung sowie Reinigungsverfahren**
Cover for cooking vessel with cleaning means and cleaning process
Couvercle pour appareil de cuisson comportant un dispositif de nettoyage et procédé de nettoyage

(30) Priorität: 12.07.2001 DE 10134005
(43) Veröffentlichungstag der Anmeldung: 02.04.2003
(73) Patentinhaber: FRIMA S.A., 68271 Wittenheim Cedex (FR); Rational AG, 86899 Landsberg/Lech (DE)
(72) Erfinder: Wagner, Stefan, 68127 Oberhergheim (DE); Wiedemann, Peter, 86836 Klosterlechfeld (DE); Kohlstrung, Peter, 86830 Kaufering (DE)
(74) Vertreter: Weber-Bruls, Dorothée

(56) Entgegenhaltungen:
- DE-A- 2 842 771
- DE-C- 10 124 703
- US-A- 3 598 105

## Beschreibung

Die Erfindung betrifft einen Deckel für ein Gargerät mit einem von dem Deckel zumindest teilweise verschließbaren Garbehälter, insbesondere in Form eines Tiegels, wobei in dem Deckel mindestens ein Zulaufkanal zum Zuführen zumindest eines ersten Fluids in den Garbehälter und/oder mindestens ein erster Ablaufkanal zum Abführen zumindest eines zweiten Fluids aus dem Garbehälter zumindest teilweise verlaufen.

Es sind im Stand der Technik eine Vielzahl von Gargeräten bekannt, die zumindest einen Garbehälter aufweisen, der nach oben hin offen und während eines Garprozesses frei zugänglich oder mit einem Deckel verschließbar ist, wobei der Deckel zumindest einen Zulauf- und einen Ablaufkanal für ein Fluid aufweist.

So ist aus der US 3,598,105 beispielsweise ein gattungsgemäßer Deckel für einen Garbehälter bekannt, der mehrere Kanäle aufweist, durch die dem Garbehälter während eines Garprozesses zusätzliche Flüssigkeit zugeführt werden kann, ohne daß dazu der Deckel vom Garbehälter entfernt werden muß. Darüber hinaus dienen die Kanäle zum Abführen von Wasserdampf und nicht kondensierbaren Gasen.

Bei den bekannten Gargeräten wird eine Reinigung des Garbehälters meist wie folgt durchgeführt:

In den geöffneten Garbehälter wird vom Benutzer manuell eine Reinigungsflüssigkeit eingefüllt, und zum Einweichen der im Garbehälter vorhandenen Verunreinigungen wird die Reinigungsflüssigkeit im Garbehälter belassen und unter Umständen erwärmt. Nach Verstreichen einer gewissen Zeitdauer werden die im Garbehälter vorhandenen Verunreinigungen mittels Bürsten mechanisch gelöst und zusammen mit der Reinigungsflüssigkeit durch Kippen des Garbehälters aus dem Garbehälter abgelassen. Abschließend wird der Garbehälter manuell vom Benutzer getrocknet. Dieses Reinigungsverfahren ist für den Benutzer sehr zeitaufwendig, und es sind große Mengen an Reinigungsflüssigkeit notwendig.

In der nicht vorveröffentlichten DE 101 24 703.6 ist eine Reinigungsvorrichtung für ein Gargerät mit zumindest einem Garbehälter beschrieben, die insbesondere einen Schwenkarm mit Sprühdüsen und einem Bürstenkopf aufweist, der über eine Steuer- und/oder Regeleinheit zur Reinigung des Garbehälters betreibbar ist. Dieser Schwenkarm kann zumindest teilweise in den Garbehältern eingeführt werden, so daß über die Sprühdüsen dem Garbehälter Flüssigkeit zur Reinigung zugeführt wird, während eine mechanische Reinigung über den Bürstenkopf möglich ist. Nachteilig bei diesem Gargerät ist jedoch, daß die Reinigungsvorrichtung einen zusätzlichen Aufbau auf dem Gargerät darstellt.

Ferner ist aus der DE 28 42 771 C2 eine Vorrichtung zur Wärmebehandlung von Nahrungsmitteln bekannt, die einen schrankförmigen Garraum aufweist. Es ist vorgesehen, daß innerhalb des Garraums am Boden, an Wänden bzw. an im Garraum befindlichen Luftleitblechen Düsen bzw. ein Sprüharm angeordnet werden können. Diese dienen der Zuführung von Reinigungsmitteln bzw. Wasser.

Aufgabe der vorliegenden Erfindung ist es daher, den gattungsgemäßen Deckel für ein Gargerät derart weiterzuentwickeln, daß die Nachteile des Stands der Technik überwunden werden. Ferner soll ein Verfahren zur Reinigung eines Gargeräts zur Überwindung besagter Nachteile geliefert werden.

Die den Deckel betreffende Aufgabe wird erfindungsgemäß gelöst durch eine Reinigungsvorrichtung, die den Zulaufkanal und/oder den ersten Ablaufkanal umfaßt.

Dabei kann vorgesehen sein, daß die Reinigungsvorrichtung zumindest einen zweiten durch den Garbehälter hindurchtretenden Ablaufkanal zum Abführen des zweiten Fluids aus dem Garbehälter umfaßt.

Eine erfindungsgemäße Ausführungsform ist gekennzeichnet durch zumindest ein mit dem Zulaufkanal und/oder dem ersten und/oder zweiten Ablaufkanal auf der dem Garbehälter zugewandten Seite des Deckels, vorzugsweise über eine Schnapp-, Dreh- und/oder Steckverbindung, verbindbares Kanalabschlußstück.

Dabei kann vorgesehen sein, daß das zumindest eine Kanalabschlußstück ein Rohr, vorzugsweise in Form eines Schnorchels gekrümmt, zumindest eine Sprühdüse und/oder einen, vorzugsweise mehrere Sprühdüsen umfassenden, insbesondere durch das durch das Kanalabschlußstück fließende erste Fluid angetriebenen, Dreh- oder Schwenksprinkler umfaßt.

Eine Weiterentwicklung des erfindungsgemäßen Deckels ist gekennzeichnet durch zumindest ein, vorzugsweise steuer- und/oder regelbares, erstes Ventil in dem Zulaufkanal und/oder zweites Ventil (18) in dem ersten und/oder zweiten Ablaufkanal.

Ferner wird erfindungsgemäß vorgeschlagen, daß der Garbehälter im Bereich des mit dem Ablaufkanal verbindbaren Kanalabschlußstücks eine Vertiefung aufweist.

Bevorzugt ist ein erfindungsgemäßer Deckel gekennzeichnet durch zumindest eine Verschwenkvorrichtung, zumindest eine Dichtungsvorrichtung und/oder zumindest eine Verschlußvorrichtung, vorzugsweise zum dichten Verschließen des Deckels auf dem Garbehälter.

Auch kann vorgesehen sein, daß ein erfindungsgemäßer Deckel gekennzeichnet ist durch eine Kippvorrichtung zum, vorzugsweise automatischen, steuer- und/oder regelbaren, Kippen des Garbehälters, so daß zumindest der ersten und/oder zweite Ablaufkanal am tiefsten Punkt des gekippten Garbehälters angeordnet ist bzw. sind.

Eine weitere erfindungsgemäße Ausführungsform ist gekennzeichnet durch zumindest eine mit dem Zulaufkanal in Wirkverbindung stehende erste Pumpe, insbesondere Hochdruckpumpe, eine Dampferzeugungseinheit und/oder eine Heißlufterzeugungseinheit.

Bevorzugt ist ein erfindungsgemäßer Deckel gekennzeichnet durch zumindest eine mit dem ersten und/oder zweiten Ablaufkanal in Wirkverbindung stehende, insbesondere schmutzgängige, zweite Pumpe, wobei der Zulaufkanal und der erste und/oder zweite Ablaufkanal vorzugsweise unter Zwischenschaltung der Pumpe und/oder eines ersten Sensors zum Erfassen des Verschmutzungsgrads und/oder Temperatur des zweiten Fluids, insbesondere über ein drittes Ventil, miteinander verbindbar sind.

Vorteilhafterweise weist der erfindungsgemäße Deckel einen mit dem ersten und/oder zweiten Ablaufkanal, vorzugsweise unter Zwischenschaltung des zweiten Ventils, in Verbindung stehenden Ablöschkasten, wobei der Ablöschkasten vorzugsweise einen mit der zweiten Pumpe verbindbaren dritten Ablaufkanal aufweist, auf.

Dabei kann insbesondere vorgesehen sein, daß der Ablöschkasten zumindest einen ersten Zulauf für das zweite Fluid, zumindest einen zweiten Sensor zur Erfassung der Temperatur innerhalb des Ablöschkastens, zumindest einen dritten Sensor zur Erfassung des Fluidpegels im Ablöschkasten, einen Überlauf und/oder zumindest eine vorzugsweise zwischen dem Ablöschkasten und dem zweiten Ablaufkanal und/oder im Bereich des dritten Ablaufkanal angeordnete Filtereinrichtung umfaßt.

Auch kann erfindungsgemäß vorgesehen sein, daß dem Ablöschkasten zumindest ein drittes Fluid in Form einer Flüssigkeit, wie Frischwasser, über vorzugsweise zumindest ein viertes Ventil und/oder ein viertes Fluid in Form eines Gases und/oder Dampfes, wie Wasserdampfes, über vorzugsweise zumindest ein fünftes Ventil und Zuläufe, vorzugsweise gesteuert und/oder geregelt, zuführbar ist, und/oder dem Ablöschkasten ist zumindest ein Tab, umfassend ein Reinigungs- und/oder Entkalkungsmittel, vorzugsweise über einen Schiebekasten, zuführbar.

Eine Weiterentwicklung eines erfindungsgemäßen Deckels ist gekennzeichnet durch zumindest ein erstes Reservoir für das erste Fluid und/oder zumindest ein zweites Reservoir für das zweite Fluid, wobei das erste Reservoir mit dem Zulaufkanal und das zweite Reservoir mit dem ersten und/oder zweiten Ablaufkanal verbindbar sind, vorzugsweise über eine Schnapp-, Dreh- und/oder Steckverbindung.

Ferner ist ein erfindungsgemäßer Deckel gekennzeichnet durch eine mit der ersten und/oder zweiten Pumpe, dem ersten, zweiten, dritten, vierten und/oder fünften Ventil, der Dampferzeugungseinheit, der Heißlufterzeugungseinheit, der Kippvorrichtung, der Verschwenkvorrichtung, der Dichtvorrichtung, der Verschlußvorrichtung, dem ersten, zweiten und/oder dritten Sensor, und/oder zumindest einem vierten Sensor zur Erfassung der Temperatur des Deckels und/oder des Garbehälters, in Wirkverbindung stehende Steuer- und/oder Regeleinheit.

Mit der Erfindung wird auch vorgeschlagen, daß der Deckel zumindest bereichsweise transparent ist.

Erfindungsgemäß wird auch ein Verfahren zum Reinigen eines Gargeräts mit einem erfindungsgemäßen Deckel, umfassend folgende Schritte:
a) insbesondere dichtes, Verschließen des Garbehälters mittels des Deckels; und
b) Zuführen des ersten Fluids durch den Zulaufkanal in den Garbehälter und/oder Abführen des zweiten Fluids durch den Ablaufkanal aus dem Garbehälter; geliefert.

Dabei kann vorgesehen sein, daß, insbesondere vor dem Verschließen des Garbehälters das erste Fluid und/oder ein Reinigungs- und/oder Entkalkungsmittel, vorzugsweise in Tab-Form, dem Garbehälter zugeführt wird bzw. werden.

Vorteilhafterweise ist das erfindungsgemäße Verfahren dadurch gekennzeichnet, daß ein Reiniger, ein Klarspüler, ein Entkalker, ein Spülmittel und/oder Wasser, in Dampfform und/oder flüssig, als erstes Fluid ausgewählt wird bzw. werden, wobei das erste Fluid vorzugsweise unter Hochdruck zugeführt wird.

Ferner wird erfindungsgemäß vorgeschlagen, daß das zweite Fluid aus dem ersten Fluid und Schmutzpartikeln zusammengesetzt wird, wobei vorzugsweise der Verschmutzungsgrad des zweiten Fluids zum Steuern und/oder Regeln herangezogen wird.

Auch kann vorgesehen sein, daß das zweite Fluid aus dem Garbehälter durch den ersten und/oder zweiten Ablaufkanal, vorzugsweise mittels eines in dem Ablöschkasten, insbesondere durch Zufuhr von Wasser in den Ablöschkasten, erzeugten Unterdrucks, abgesaugt wird und/oder der Ablauf des zweiten Fluids aus dem Garbehälter durch den ersten und/oder zweiten Ablaufkanal, insbesondere durch Kippen des Garbehälters, aufgrund der Gravitationskraft, unterstützt wird.

Bevorzugt ist ein erfindungsgemäßes Verfahren gekennzeichnet durch mehrere Reinigungsphasen, wobei während einer Reinigungsphase der Zulaufkanal und der erste und/oder zweite Ablaufkanal miteinander verbunden werden, und das erste und/oder zweite Fluid mehrfach durch den Garbehälter umgewälzt wird bzw. werden, wobei die Dauer der Umwälzung, vorzugsweise in Abhängigkeit vom Verschmutzungsgrad des zweiten Fluids, gesteuert und/oder geregelt wird, und das zweite Fluid nach Öffnen des Kreislaufes entsorgt wird.

Dabei kann das Verfahren vorsehen, daß, vorzugsweise vor der Reinigungsphase, in einer Erwärmungsphase das erste und/oder zweite Fluid im Garbehälter, vorzugsweise durch Erwärmen des Garbehälters, erwärmt wird.

Eine Weiterentwicklung des erfindungsgemäßen Verfahrens ist gekennzeichnet durch zumindest eine Trocknungsphase, vorzugsweise nach der Reinigungsphase, wobei während der Trocknungsphase der Garbehälter erwärmt und/oder dem Garbehälter Heißluft zugeführt wird, so daß die im Garbehälter befindlichen Flüssigkeitsreste verdampft und durch den ersten und/oder zweiten Ablaufkanal abgeführt werden.

Schließlich wird erfindungsgemäß vorgeschlagen, daß nach Auswahl eines Reinigungsprogrammes mit einer bestimmten Anzahl und Reihenfolge von Reinigungs-, Erwärmungs- und/oder Trocknungsphasen durch den Benutzer die Reinigung automatisch, gesteuert und/oder geregelt, vorzugsweise in Abhängigkeit von der Temperatur des ersten und/oder zweiten Fluids, des Garbehälters und/oder des Deckels und/oder des Verschmutzungsgrades des zweiten Fluids durchgeführt wird.

Der Erfindung liegt somit die Erkenntnis zugrunde, daß ein Gargerät so ausgeführt werden kann, daß eine automatische Reinigung eines Garbehälters unter Minimierung der notwendigen Menge an Reinigungsflüssigkeiten ohne zusätzliche Aufbauten auf dem Gargerät ermöglicht wird, nämlich durch Integration einer Reinigungsvorrichtung in den Deckel des Gargeräts.

Weitere Merkmale und Vorteile der Erfindung ergeben sich aus der nachstehenden Beschreibung, in der bevorzugte Ausführungsformen der Erfindung beispielhaft anhand schematischer Zeichnungen im einzelnen erläutert sind. Dabei zeigt:
- Fig. 1: eine Schnittansicht durch ein Gargerät mit einem erfindungsgemäßen Deckel, im Grundzustand des Garbehälters;
- Fig. 2: eine Schnittansicht eines weiteren Gargeräts mit dem erfindungsgemäßen Deckel von Fig. 1, im gekippten Zustand des Garbehälters;
- Fig. 3: ein Blockdiagramm für die Zuleitungen des Deckels der Figuren 1 und 2; und
- Fig.4: ein Blockdiagramm für die Zuleitungen eines Deckels gemäß einer weiteren Ausführungsform der Erfindung

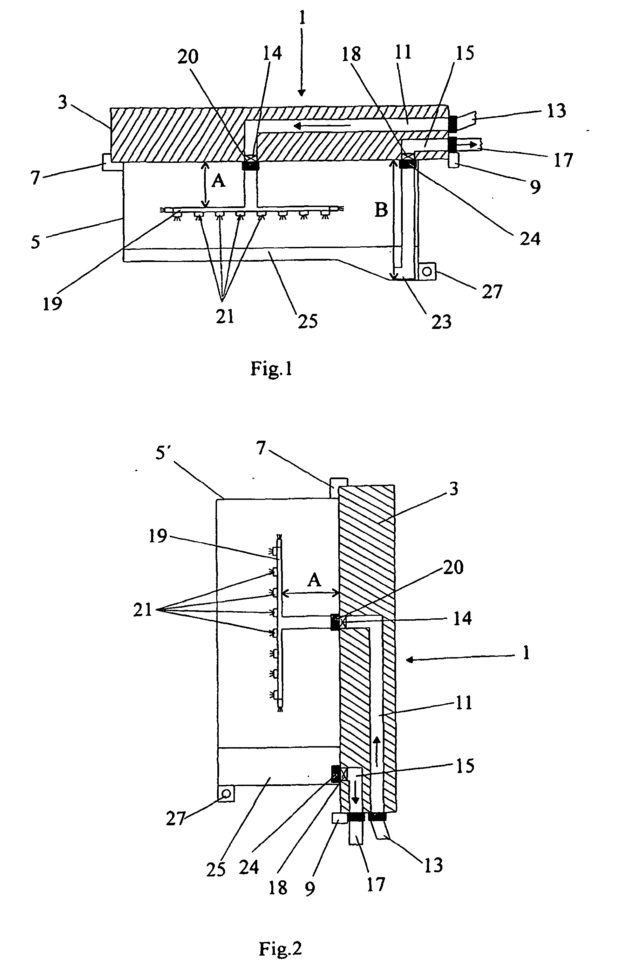

In Fig. 1 ist ein Gargerät 1, das einen erfindungsgemäßen Deckel 3 und einen Garbehälter 5 umfaßt, dargestellt. Um ein dichtes Verschließen des Garbehälters 5 durch den Deckel 3 zu ermöglichen, weist das Gargerät 1 einen Verschlußmechanismus 7 und der Deckel 3 nicht dargestellte Dichtungen im Kontaktbereich zwischen dem Deckel 3 und dem Garbehälter 5 auf. Der Deckel 3 ist über ein Scharnier 9 gegenüber dem Garbehälter 5 zum Öffnen des Garbehälters 5 schwenkbar gelagert. In den Deckel 3 ist ein Zulaufkanal 11, welcher mit einer ersten Leitung 13 verbindbar ist und ein erstes Ventil 14 umfaßt, und ein Ablaufkanal 15, welcher mit einer zweiten Leitung 17 verbunden ist und ein zweites Ventil 18 umfaßt, integriert. Mit dem Zulaufkanal 11 ist ein Kanalabschlußstück in Form eines Drehsprinklers 19 mittels einer geeigneten selbstsichernden Steckverbindungsvorrichtung 20 verbindbar. Dieser Drehsprinkler 19 weist eine variable Bauhöhe A auf und umfaßt mehrere Sprühdüsen 21. Der Ablaufkanal 15 ist mit einem Kanalabschlußstück in Form eines Schnorchels 23 mittels einer geeigneten selbstsichernden Steckverbindungsvorrichtung 24 verbindbar. Dieser Schnorchel 23 weist eine Länge B, die der Höhe des Garbehälters 5 im Bereich des Austritts des Ablaufkanals 15 aus dem Deckel 3 entspricht, auf Somit liegt der Schnorchel 23 auf dem Boden des Garbehälters 5 auf. Darüber hinaus ist die Bauhöhe A des Drehsprinklers 19 der Tiefe des Garbehälters 5 angepaßt, um eine gleichmäßige Benetzung des Garbehälters 5 mit einem aus den Sprühdüsen 21 austretenden Fluids und somit eine größtmögliche Reinigungswirkung des Garbehälters 5 zu erzielen. Das in den Garbehälter 5 über den Drehsprinkler 19 eingebrachte Fluid, z. B. Reinigungsmittel, Spülmittel, Entkalker, Wasser und/oder Wasserdampf, sammelt sich am Boden des Garbehälters 5 in Form der Flüssigkeit 25. Diese Flüssigkeit 25 wird durch den mit dem Ablaufkanal 15 verbundenen Schnorchel 23 abgeführt. Um eine vollständige Entfernung der Flüssigkeit 25 zu erreichen, ist, wie bereits zuvor erwähnt, die Länge B des Schnorchels 23 der Tiefe des Garbehälters 5 angepaßt, und der Garbehälter 5 weist im Endbereich des Schnorchels 23 eine Vertiefung auf.

In Fig. 2 ist eine weitere erfindungsgemäße Ausführungsform eines Gargeräts 1 dargestellt. Die Bezugszeichen entsprechen denjenigen in Fig. 1. In dem in Fig. 2 dargestellten Gargerät 1 kommt ein Garbehälter 5', der eine größere Tiefe als der in Fig. 1 dargestellte Garbehälter 5 aufweist, zum Einsatz. Die Bauhöhe A des Drehsprinklers 19 ist dieser größeren Tiefe angepaßt. Es lassen sich somit handelsübliche Garbehälter, die unterschiedliche Tiefen aufweisen, mit dem erfindungsgemäßen Deckel 3 verwenden und reinigen. Darüber hinaus ist der Garbehälter 5', der mit dem Deckel 3 über den Verschlußmechanismus 7 und das Scharnier 9 verbunden ist, über eine Kippvorrichtung 27 gegenüber der in Fig. 1 dargestellten Grundstellung des Garbehälters 5 um 90° gekippt. Die Kippvorrichtung 27 ist an einem nicht dargestellten Gehäuse des Gargeräts 1 befestigt.

Aufgrund der Kippung des Garbehälters 5' sammelt sich die über den Drehsprinkler 19 in den Garbehälter 5' eingebrachte Flüssigkeit 25 durch die Gravitationskraft auf der Seitenwand des Garbehälters 5'. Die Öffnung des Ablaufkanals 15 ist so im Deckel 3 angeordnet, daß die Flüssigkeit 25 ohne zusätzliche Vorrichtungen durch den Ablauflcanal 15 und die an diesen angeschlossene zweite Leitung 17 über die Gravitationskraft abfließen kann.

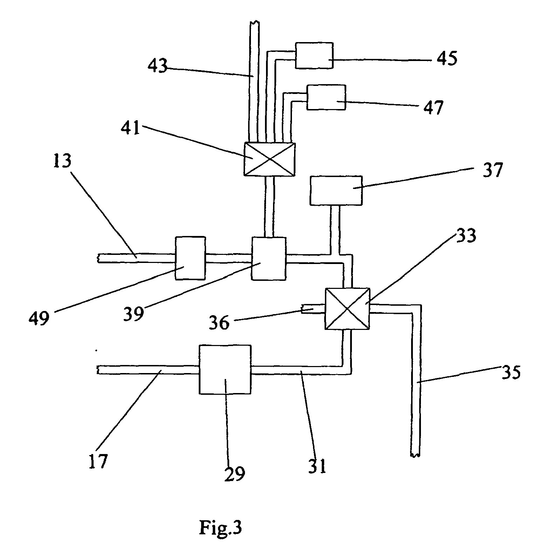

In Fig. 3 ist der Verlauf der Leitungen 13 und 17 des erfindungsgemäßen Deckels 3 der Figuren 1 und 2 und deren Verbindung mit weiteren Elementen des Gargeräts 1 dargestellt. Die zweite Leitung 17 führt zu einer schmutzgängigen Pumpe 29, mittels der die Flüssigkeit 25 aus dem Garbehälter 5, 5' abgesaugt werden kann. Darüber hinaus kommt es in der Pumpe 29 zur Zerkleinerung von in der Flüssigkeit 25 vorhandenen Schmutzpartikeln. Über eine Leitung 31 ist die Pumpe 29 mit einem Ventil 33 verbunden. Das Ventil 33 weist drei Ausgänge auf. Ein Ausgang ist mit einer Entsorgungsleitung 35 verbunden, über die die Flüssigkeit 25 aus dem Gargerät 1 abgeführt werden kann. Der zweite Ausgang des Ventils 33 ist mit einer Abluftleitung 36 verbunden, während der dritte Ausgang mit der ersten Leitung 13 verbunden ist. An die erste Leitung 13 ist eine Heißlufterzeugungseinheit 37 über ein nicht dargestelltes Ventil angeschlossen. Darüber hinaus befindet sich in der ersten Leitung 13 ein Verdampfer 39. Der Verdampfer 39 ist wiederum mit einem Ventil 41, welches wiederum mit einem Wasserzulauf 43, einem Klarspülbehälter 45 und einem Reinigerbehälter 47 verbunden ist, verbunden. Ferner befindet sich in der ersten Leitung 13, welche zum Zulaufkanal 11 führt, eine Hochdruckpumpe 49.

Im Garbetrieb des Gargeräts 1 werden der Schnorchel 23 und der Drehsprinkler 19 vom Deckel 3 entfernt, und über die Ventile 14 und 18 werden der Zulauf- und Ablaufkanal 11, 15 verschlossen, um ein Eintreten von Flüssigkeit in diese Kanäle zu verhindern und ein dichtes Verschließen des Garbehälters 5, z. B. während eines Druckgarprozesses, zu ermöglichen.

Ein erfindungsgemäßer Reinigungsprozeß läuft wie folgt ab:

Ein Benutzer verbindet zunächst den Drehsprinkler 19 mit dem Zulaulkanal 11 und wahlweise den Ablaufkanal 15 mit dem Schnorchel 23. Anschließend wählt er mittels einer nicht dargestellten Eingabeeinheit ein Reinigungsprogramm aus, welches dann automatisch abläuft. Der Ablauf des Reinigungsprogramms wird über eine nicht dargestellte Regeleinheit, welche mit dem Verschlußmechanismus 7, der Kippvorrichtung 27, den Ventilen 14, 18, 33, 41, den Pumpen 29, 49, der Heißlufterzeugungseinheit 37, dem Verdampfer 39 und nicht dargestellte Sensoren in Verbindung steht, geregelt. Ein beispielhaftes Reinigungsprogramm umfaßt folgende Programmpunkte:

Zunächst werden die Ventile 14, 41 so gesteuert, daß ein Gemisch aus Wasser und Reinigerflüssigkeit aus dem Wasserzulauf 43 und dem Reinigerbehälter 47 durch den ausgeschalteten Verdampfer 39, die ausgeschaltete Hochdruckpumpe 49, die erste Leitung 13, den Zulaufkanal 11 und den Drehsprinkler 19 dem Garbehälter 5, 5' zugeführt wird. Das Ventil 18 ist zunächst geschlossen, so daß sich im Garbehälter 5, 5' die Flüssigkeit 25 ansammelt. Erreicht der Flüssigkeitsstand 25 im Inneren des Garbehälters 5, 5' einen bestimmten Wert, der über einen nicht dargestellten Sensor detektiert wird, wird das Ventil 33 so gesteuert, daß eine Verbindung zwischen den Leitungen 31 und 13 entsteht. Darüber hinaus wird die Verbindung zwischen der Leitung 13 und der Heißlufterzeugungseinheit 37 geschlossen. Nach Öffnen des Ventils 18 werden die Pumpe 29 und die Hochdruckpumpe 49 eingeschaltet. Durch die Pumpe 29 wird die Flüssigkeit 25 entweder über den Schnorchel 23 oder direkt durch den Ablaufkanal 15 aus dem Garbehälter 5, 5' abgesaugt. In der Pumpe 29 werden etwaig in der Flüssigkeit 25 vorhandene Schmutzpartikel zerkleinert, und die Flüssigkeit 25 fließt über die Leitung 31 und das Ventil 33 in die erste Leitung 13. Durch die Hochdruckpumpe 49 wird die Flüssigkeit 25 unter Hochdruck über die erste Leitung 13 und den Zulaufkanal 11 dem Drehsprinkler 19 wieder zugeführt, es kommt zu einer Zirkulation der Reinigungsflotte. Über die Sprühdüsen 21 wird der Garbehälter 5, 5' somit mit der Flüssigkeit 25 bestrahlt und Verunreinigungen an den Wänden des Garbehälters 5, 5' mechanisch entfernt. Somit wird zunächst die Flüssigkeit 25 im Garbehälter 5, 5' umgewälzt, und mittels des Reinigungsflottenstroms eine mechanische Reinigung des Garbehälters 5, 5' erreicht. Übersteigt die Verunreinigung der Reinigungsflotte einen bestimmten Wert, welche über einen nicht dargestellten Sensor festgestellt wird, so wird die Hochdruckpumpe 49 ausgeschaltet, und das Ventil 33 so umgestellt, daß die Reinigungsflotte über die Pumpe 29 aus dem Garbehälter 5, 5' abgesaugt und der Entsorgungsleitung 35 zugeführt wird.

Nach Beendigung dieser ersten Reinigungsphase wird das Ventil 33 wieder in die Ausgangsposition gestellt.

Um eine weitere Reinigung des Garbehälters 5, 5' zu erreichen, wird das Umwälzen der Flüssigkeit 25 wiederholt, wobei die Flüssigkeit 25 zur Erhöhung der Reinigungswirkung mittels des Verdampfers 39 zunächst verdampft wird. Das so dem Garbehälter 5, 5' über den Drehsprinkler 19 und die Sprühdüsen 21 zugeführte Fluid kondensiert an den Innenwänden des Garbehälters 5, 5' und sammelt sich in Form der Flüssigkeit 25 im Garbehälter 5, 5'. Über den Ablaufkanal 15, die zweite Leitung 17, die Pumpe 29, die Leitung 31 und das Ventil 33 wird die Flüssigkeit 25 dem Verdampfer 39 und anschließend über die Hochdruckpumpe 49 und die erste Leitung 13 wieder dem Garbehälter 5, 5' zugeführt. Zur Beendigung dieses Reinigungsschrittes werden der Verdampfer 39 und die Hochdruckpumpe 49 ausgeschaltet und die im Garbehälter 5, 5' vorhandene Flüssigkeit 25 über die Pumpe 29 und die Entsorgungsleitung 35 abgeführt.

In einem weiteren Reinigungsschritt wird ein Gemisch aus Wasser und Klarspüler, welche durch Steuerung des Ventils 41 aus dem Wasserzulauf 43 und dem Klarspülerbehälter 45 vermischt werden, in einer in den zuvor beschriebenen Reinigungsschritten analogen Weise durch den Garbehälter 5, 5' umgewälzt.

Diesem Reinigungsschritt schließt sich abschließend ein Trocknungsschritt an. In diesem wird über die Heißlufterzeugungseinheit 37 dem Garbehälter 5, 5' über die erste Leitung 13 Heißluft zugeführt, wobei zusätzlich die Wände des Garbehälters 5, 5' durch nicht dargestellte Heizeinrichtungen erwärmt werden können. Die Heißluft tritt durch den Ablaufkanal 15, das geöffnete Ventil 18, die Leitungen 17 und 31 und das Ventil 33 durch die Abluftleitung 36 aus dem Gargerät 1 aus.

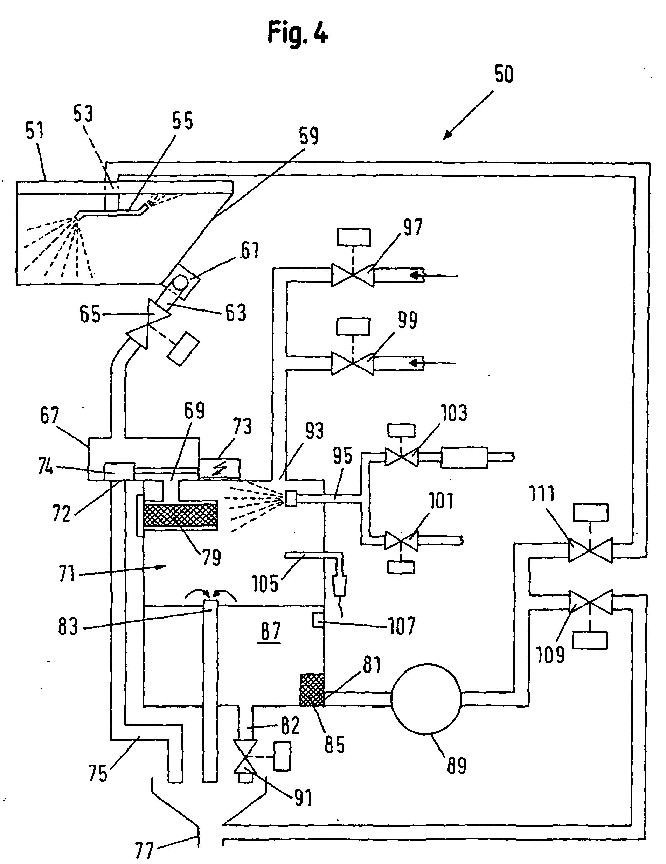

In Figur 4 ist ein Gargerät 50 mit einem weiteren erfindungsgemäßen Deckel 51 dargestellt. Im Gegensatz zu der Ausführungsform des in den Figuren 1 und 2 dargestellten Deckels 3 weist der Deckel 51 nur einen Zulaufkanal 53 auf, der mit einem Drehsprinkler 55 verbindbar ist. Das Gargerät 50 umfaßt darüber hinaus einen Garbehälter in Form eines Tiegels 59. Der Tiegel 59 ist über eine Kippvorrichtung 61 kippbar gelagert. Durch die Kippvorrichtung 61 verläuft zumindest teilweise ein Ablaufkanal 63 aus dem Tiegel 59, mittels dem in dem Tiegel 59 vorhandenes Fluid ablaufen bzw. abgesaugt werden kann. Der Ablaufkanal 63 ist mittels eines Ventils 65 verschließbar.

Im Folgenden wird nun die vom Gargerät 50 und dem Deckel 51 teilweise umfaßte Reinigungseinrichtung erläutert:
Das Ventil 65 ist auf der dem Ablaufkanal 63 abgewandten Seite mit einem Verteiler 67 verbunden. Der Verteiler 67 weist eine erste Öffnung 69 auf, mittels der der Ablaufkanal 63 mit einem Ablöschkasten 71 verbindbar ist. Ferner weist der Verteiler 67 eine zweite Öffnung 72 auf, die eine Verbindung des Verteilers 67 über eine Leitung 75 mit einem Entsorgungskanal 77 ermöglicht. Die beiden Öffnungen 69 und 72 können wahlweise über einen mittels einer Antriebseinrichtung 73 angetriebenen Schieber 74 geöffnet bzw. verschlossen werden. Wird somit das Ventil 65 geöffnet und der Schieber 74 derart positioniert, daß die zweite Öffnung 72 geöffnet ist, während die erste Öffnung 69 verschlossen ist, so fließt ein innerhalb des Tiegels 59 vorhandenes Fluid über den Ablaufkanal 63 durch den Verteiler 67 und die Leitung 75 in den Entsorgungskanal 77.

Innerhalb des Ablöschkastens 71 ist eine Filtereinrichtung 79, die mit der ersten Öffnung 69 verbunden ist, angeordnet. Diese dient dazu, in einem über den Ablaufkanal 63 abfließenden Fluid vorhandene Fremdkörper heraus zu filtern, so daß diese nicht in den Ablöschkasten 71 gelangen können. Der Ablöschkanal 71 weist neben der ersten Öffnung 69 zwei Ablaufkanäle 81, 82 sowie einen Überlauf 83 auf. Im Bereich des ersten Ablaufkanals 81 ist eine Filtereinrichtung 85 angeordnet, die verhindert, daß in einer im Ablöschkasten 71 vorhandenen Flüssigkeit 87 vorhandene Schmutzpartikel zu einer Pumpe 89 gelangen können. Es bestehen grundsätzlich drei Möglichkeiten, wie die Flüssigkeit 87 den Ablöschkasten 71 verlassen kann. Steigt der Pegel der Flüssigkeit 87 über einen durch die Geometrie des Überlaufs 83 festgelegten Pegel hinaus, so fließt die Flüssigkeit 87 durch den Überlauf 83 in den Entsorgungskanal 77. Ferner kann die Flüssigkeit 87 durch Öffnen eines Ventil 91 im wesentlichen restlos aus dem Ablöschkasten 71 über den zweiten Ablaufkanal 82 in den Entsorgungskanal 77 abgelassen werden. Schließlich kann die Flüssigkeit 87 durch die Filtereinrichtung 85 und den ersten Ablaufkanal 81 durch die Pumpe 89 abgesaugt werden. Der Ablöschkasten 71 umfaßt darüber hinaus zwei Zuläufe 93, 95. Dabei steht der erste Zulauf 93 über Ventile 97, 99 mit nicht dargestellten Dampferzeugungseinheiten in Verbindung.

Die Flüssigkeit 87 kann einerseits durch den Ablaufkanal 63 aus dem Tiegel 59 in den Ablöschkasten 71 gelangen, andererseits kann dem Ablöschkasten 71 über den zweiten Zulauf 95 eine Flüssigkeit zugeführt werden. Dazu steht der zweite Zulauf 95 mit Ventilen 101, 103 in Verbindung, über die beispielsweise Warmwasser bzw. Kaltwasser geregelt zugeführt werden kann. Zur Steuerung der Dampfzufuhr bzw. der Flüssigkeitszufuhr über die Zuläufe 93, 95 sind innerhalb des Ablöschkastens 71 Sensoren 105, 107 angeordnet. Diese ermöglichen die Erfassung des Pegels der Flüssigkeit 87 sowie der Temperatur innerhalb des Ablöschkastens 71. Die Sensoren 105 und 107 sind mit einer nicht dargestellten Regel- bzw. Steuereinheit, die ferner mit den Ventilen 65, 91, 97, 99, 101, 103 sowie dem Antrieb 73 in Wirkverbindung steht, verbunden. Wird dem Ablöschkasten 71 über den zweiten Zulauf 95 kaltes Wasser zugeführt, so kommt es zu einer Kondensation von innerhalb des Ablöschkastens 71 vorhandenem gasförmigen Fluid. Dieser Unterdruck innerhalb des Ablöschkastens 71 bewirkt, daß in dem Fall, in dem sich der Schieber 74 in der in Figur 4 dargestellten Position befindet und das Ventil 65 geöffnet ist, über den Ablaufkanal 63 in dem Tiegel 59 vorhandenes Fluid aus dem Tiegel 59 abgesaugt wird. Hierbei kann es sich einerseits um Flüssigkeiten handeln, die sich während eines Reinigungsprozesses innerhalb des Tiegels 59 befindet. Die Verwendung des Ablöschkastens 71 ermöglicht es andererseits auch, daß in dem Fall, in dem innerhalb des Gargeräts 50 ein Dampfgarprozess stattfindet, im Tiegel 59 vorhandener Dampf bzw. Wrasen effektiv aus dem Tiegel 59 abgesaugt werden kann bzw. können. Dies ermöglicht wiederum eine sehr genaue Führung eines Dampfgarprozesses innerhalb des Tiegels 59.

Im Folgenden wird nunmehr der Ablauf eines Reinigungsprozesses innerhalb des Tiegels 59 mit Hilfe des erfindungsgemäßen Deckels 51 beschrieben:
Zunächst wird von einem Benutzer bei geöffnetem Deckel 51 sowie geschlossenem Ventil 65 manuell Wasser in den Tiegel 59 eingeführt. Ferner wird dem in den Tiegel 59 eingefüllten Wasser ein Reinigungs-und/oder Entkalkungsmittel in Form eines Tabs hinzugefügt. Anschließend wird vom Benutzer an den Zulaufkanal 53 der Drehsprinkler 55 angeschlossen und der Tiegel 59 mittels des Deckels 51 verschlossen. Anschließend wird über nicht dargestellte Heizelemente am Tiegel 59 das Wasser innerhalb des Tiegels 59 erwärmt. Um den Zeitpunkt zu bestimmen, an dem das Wasser im Tiegel 59 die gewünschte Temperatur hat, steht die nicht dargestellte Steuer- und Regeleinheit mit einem im Deckel 51 angeordneten, ebenfalls nicht dargestellten Temperatursensor zur Messung der Temperatur des Deckels 51 in Verbindung. Erreicht die Flüssigkeit innerhalb des Tiegels 59 die gewünschte Temperatur, so wird das Ventil 65 geöffnet und die zweite Öffnung 72 mittels des Schiebers 74 verschlossen. Dadurch fließt die innerhalb des Tiegels 59 vorhandene Flüssigkeit in den Ablöschkasten 71. Die sich innerhalb des Ablöschkastens 71 sammelnde Flüssigkeit 87 wird mittels der Pumpe 89 durch den ersten Ablaufkanal 81 aus dem Ablöschkasten 71 abgesaugt. Anschließend wird die Flüssigkeit 87 über ein geöffnetes Ventil 111 dem Zulaufkanal 53 des Deckels 51 zugeführt. Dadurch wird die Flüssigkeit in dem Tiegel 59 umgewälzt und somit eine Reinigung des Tiegels 59 erreicht. Erreicht der Verschmutzungsgrad der Flüssigkeit 87 einen bestimmten Wert, der mittels eines nicht dargestellten Sensors erfaßt wird, so wird einerseits das Ventil 111 geschlossen und andererseits ein Ventil 109 geöffnet. Dies bewirkt, daß die durch die Pumpe 89 angetriebene Flüssigkeit 87 dem Entsorgungskanal 77 zugeführt wird. Erreicht der Pegel der Flüssigkeit 87 innerhalb des Ablöschkastens 71 einen über den Sensor 107 erfaßten Minimalpegel, so wird die Pumpe 89 zunächst abgeschaltet und über die Ventile 101 und 103 dem Ablöschkasten 71 Wasser zugeführt. Dieses durch den Zulaufkanal 95 zugeführte Frischwasser wird anschließend durch die Pumpe 89 dem Tiegel 59 über den Zulaufkanal 53 zugeführt, indem das Ventil 109 geschlossen und das Ventil 111 wiederum geöffnet wird. Um zu vermeiden, daß die durch den Tiegel 59 umgewälzte Flüssigkeit erneut erwärmt werden muß, werden die Ventile 101 und 103 mittels der nicht dargestellten Steuer- und Regeleinheit derartig geöffnet bzw. geschlossen, daß die über den Sensor 105 gemessene Temperatur einen gewünschten Soll-Wert entspricht.

Nach Beendigung dieser Reinigungsphase, in welcher die Flüssigkeit 87 durch den Tiegel 59 umgewälzt wird, wird die Flüssigkeit 87 zur Umwälzung einmal vollständig ausgetauscht. Dazu wird der Schieber 74 mittels der Antriebseinrichtung 73 so verfahren, daß die erste Öffnung 69 verschlossen wird, die Pumpe 89 wird ausgeschaltet und das Ventil 111 geschlossen sowie das Ventil 91 geöffnet. Dies führt dazu, daß die Flüssigkeit, die aus dem Tiegel 59 in den Ablaufkanal 63 fließt, über die Leitung 75 in den Entsorgungskanal 77 fließt. Ferner wird die in dem Ablöschkasten 71 vorhandene Flüssigkeit 87 über den Ablaufkanal 82 und das Ventil 91 ebenfalls dem Entsorgungskanal 77 zugeführt. Anschließend wird die zweite Öffnung 72 wieder durch den Schieber 74 verschlossen, das Ventil 91 geschlossen und über die Ventile 101 und 103 dem Ablöschkasten 71 Flüssigkeit zum Spülen des Tiegels 59 zugeführt. Dann wird das Ventil 111 geöffnet und die Pumpe 89 eingeschaltet, so daß die Flüssigkeit wiederum durch den Tiegel 59 umgewälzt wird. Nach Abschluß dieser Spülphase des Tiegels 59 wird die Pumpe 89 abgeschaltet und die Flüssigkeit 87 in dem Ablöschkasten 71 gesammelt sowie dort für einen späteren Reinigungsprozeß gespeichert. Im Anschluß wird der Tiegel 59 in einer anschließenden Trocknungsphase getrocknet, indem die Wände des Tiegels 59 durch nicht dargestellte Heizelemente erwärmt werden. Dies geschieht bei geschlossenem Ventil 65. Zur Beendigung des Reinigungsprozesses wird das Ventil 65 geöffnet und innerhalb des Ablöschkastens 71 ein Unterdruck erzeugt, indem über die Ventile 101 bzw. 103 Wasser in den Ablöschkasten 71 eingeführt und so der im Tiegel 59 vorhandene Wasserdampf effektiv abgesaugt wird. Nach erneutem Verschließen des Ventils 65 wird der Tiegel 59 vom Benutzer durch Öffnen des Deckels 51 geöffnet und abschließend der Drehsprinkler 55 entnommen.

Es wird also erfindungsgemäß erstmals ein Deckel für ein Gargerät und ein Verfahren zur Reinigung eines Gargeräts bereitgestellt, um unter Minimierung der notwendigen Menge an Reinigungsflüssigkeiten und Vermeidung zusätzlicher Aufbauten auf dem Gargerät eine automatische Reinigung eines im Gargerät angeordneten Garbehälters durchzuführen.

### Bezugszeichenliste

- 1: Gargerät
- 3: Deckel
- 5, 5': Garbehälter
- 7: Verschlußmechanismus
- 9: Scharnier
- 11: Zulaufkanal
- 13: Leitung
- 14: Ventil
- 15: Ablaufkanal
- 17: Leitung
- 18: Ventil
- 19: Drehsprinkler
- 20: Steckverbindungsvorrichtung
- 21: Sprühdüse
- 23: Schnorchel
- 24: Steckverbindungsvorrichtung
- 25: Flüssigkeit
- 27: Kippvorrichtung
- 29: Pumpe
- 31: Leitung
- 33: Ventil
- 35: Entsorgungsleitung
- 36: Abluftleitung
- 37: Heißlufterzeugungseinheit
- 39: Verdampfer
- 41: Ventil
- 43: Wasserzulauf
- 45: Klarspülerbehälter
- 47: Reinigerbehälter
- 49: Hochdruckpumpe
- 50: Gargerät
- 51: Deckel
- 53: Zulaufkanal
- 55: Drehsprinkler
- 59: Tiegel
- 61: Kippvorrichtung
- 63: Ablaufkanal
- 65: Ventil
- 67: Verteiler
- 69: Öffnung
- 71: Ablöschkasten
- 72: Öffnung
- 73: Antriebseinrichtung
- 74: Schieber
- 75: Leitung
- 77: Entsorgungskanal
- 79: Filtereinrichtung
- 81: Ablaufkanal
- 82: Ablaufkanal
- 83: Überlauf
- 85: Filtereinrichtung
- 87: Flüssigkeit
- 89: Pumpe
- 91: Ventil
- 93: Zulauf
- 95: Zulauf
- 97: Ventil
- 99: Ventil
- 101: Ventil
- 103: Ventil
- 105: Sensor
- 107: Sensor
- 109: Ventil
- 111: Ventil
- A: Bauhöhe
- B: Länge

## Patentansprüche

1. Deckel für ein Gargerät (1, 50) mit einem von dem Deckel (3, 51) zumindest teilweise verschließbaren Garbehälter (5, 5', 59), insbesondere in Form eines Tiegels, wobei in dem Deckel (3, 51) mindestens ein Zulaufkanal (11, 53) zum Zuführen zumindest eines ersten Fluids in den Garbehälter (5, 5', 59) und/oder mindestens ein erster Ablaufkanal (15) zum Abführen zumindest eines zweiten Fluids aus dem Garbehälter (5, 5', 59) zumindest teilweise verlaufen, **gekennzeichnet durch**
eine Reinigungsvorrichtung, die den Zulaufkanal (11, 53) und/oder den ersten Ablaufkanal (15) umfaßt.

2. Deckel nach Anspruch 1, **dadurch gekennzeichnet, daß**
die Reinigungsvorrichtung zumindest einen zweiten durch den Garbehälter (59) hindurchtretenden Ablaufkanal (63) zum Abführen des zweiten Fluids aus dem Garbehälter (59) umfaßt.

3. Deckel nach Anspruch 1 oder 2, **gekennzeichnet durch**
zumindest ein mit dem Zulaufkanal (11, 53) und/oder dem ersten und/oder zweiten Ablaufkanal (15) auf der dem Garbehälter (5, 5') zugewandten Seite des Deckels (3), vorzugsweise über eine Schnapp-, Dreh- und/oder Steckverbindung (20, 24), verbindbares Kanalabschlußstück (19, 23, 55).

4. Deckel nach Anspruch 3, **dadurch gekennzeichnet, daß**
das zumindest eine Kanalabschlußstück ein Rohr, vorzugsweise in Form eines Schnorchels (23) gekrümmt, zumindest eine Sprühdüse und/oder einen, vorzugsweise mehrere Sprühdüsen (21) umfassenden, insbesondere durch das durch das Kanalabschlußstück fließende erste Fluid angetriebenen, Dreh- oder Schwenksprinkler (19, 55) umfaßt.

5. Deckel nach einem der vorangehenden Ansprüche, **gekennzeichnet durch**
zumindest ein, vorzugsweise steuer- und/oder regelbares, erstes Ventil (14) in dem Zulaufkanal (11) und/oder zweites Ventil (18, 65) in dem ersten und/oder zweiten Ablaufkanal (15, 63).

6. Deckel nach einem der vorangehenden Ansprüche, **dadurch gekennzeichnet, daß**
der Garbehälter (5, 5') im Bereich des mit dem Ablauflcanal (15) verbindbaren Kanalabschlußstücks (23) eine Vertiefung aufweist.

7. Deckel nach einem der vorangehenden Ansprüche, **gekennzeichnet durch**
zumindest eine Verschwenkvorrichtung (9), zumindest eine Dichtungsvorrichtung und/oder zumindest eine Verschlußvorrichtung (7), vorzugsweise zum dichten Verschließen des Deckels (3) auf dem Garbehälter (5, 5').

8. Deckel nach einem der vorangehenden Ansprüche, **gekennzeichnet durch**
eine Kippvorrichtung (27, 61) zum, vorzugsweise automatischen, steuer- und/oder regelbaren, Kippen des Garbehälters (5, 5', 59), so daß zumindest der erste und/oder zweite Ablaufkanal (15, 63) am tiefsten Punkt des gekippten Garbehälters (5, 5', 59) angeordnet ist bzw. sind.

9. Deckel nach einem der vorangehenden Ansprüche, **gekennzeichnet durch**
zumindest eine mit dem Zulaufkanal (11) in Wirkverbindung stehende erste Pumpe, insbesondere Hochdruckpumpe (49), eine Dampferzeugungseinheit (39) und/oder eine Heißlufterzeugungseinheit (37).

10. Deckel nach einem der vorangehenden Ansprüche, **gekennzeichnet durch**
zumindest eine mit dem ersten und/oder zweiten Ablaufkanal (15, 63) in Wirkverbindung stehende, insbesondere schmutzgängige, zweite Pumpe (29, 89), wobei der Zulaufkanal (11, 53) und der erste und/oder zweite Ablaufkanal (15, 63) vorzugsweise unter Zwischenschaltung der Pumpe (29, 89) und/oder eines ersten Sensors zum Erfassen des Verschmutzungsgrads und/oder Temperatur des zweiten Fluids, insbesondere über ein drittes Ventil (33, 111), miteinander verbindbar sind.

11. Deckel nach einem der vorangehenden Ansprüche, **gekennzeichnet durch**
einen mit des zweiten und/oder zweiten Ablaufkanal (63), vorzugsweise unter Zwischenschaltung des zweiten Ventils (65), in Verbindung stehenden Ablöschkasten (71), wobei der Ablöschkasten (71) vorzugsweise einen mit der zweiten Pumpe (89) verbindbaren dritten Ablaufkanal (81) aufweist.

12. Deckel nach Anspruch 11, **dadurch gekennzeichnet, daß**
der Ablöschkasten (71) zumindest einen ersten Zulauf (69) für das zweite Fluid, zumindest einen zweiten Sensor (105) zur Erfassung der Temperatur innerhalb des Ablöschkastens (71), zumindest einen dritten Sensor (107) zur Erfassung des Fluidpegels im Ablöschkasten (71), einen Überlauf (83) und/oder zumindest eine vorzugsweise zwischen dem Ablöschkasten (71) und dem zweiten Ablaufkanal (63) und/oder im Bereich des dritten Ablaufkanals (81) angeordnete Filtereinrichtung (79, 85) umfaßt.

13. Deckel nach Anspruch 11 oder 12, **dadurch gekennzeichnet, daß**
dem Ablöschkasten (71) zumindest ein drittes Fluid in Form einer Flüssigkeit, wie Frischwasser, über vorzugsweise zumindest ein viertes Ventil (101, 103) und/oder ein viertes Fluid in Form eines Gases und/oder Dampfes, wie Wasserdampfes, über vorzugsweise zumindest ein fünftes Ventil (97, 99) und Zuläufe (93, 95), vorzugsweise gesteuert und/oder geregelt, zuführbar ist, und/oder dem Ablöschkasten (71) ist zumindest ein Tab, umfassend ein Reinigungs- und/oder Entkalkungsmittel, vorzugsweise über einen Schiebekasten, zuführbar.

14. Deckel nach einem der vorangehenden Ansprüche, **gekennzeichnet durch**
zumindest ein erstes Reservoir für das erste Fluid und/oder zumindest ein zweites Reservoir für das zweite Fluid, wobei das erste Reservoir mit dem Zulaufkanal (11) und das zweite Reservoir mit dem ersten und/oder zweiten Ablaufkanal (15) verbindbar sind, vorzugsweise über eine Schnapp-, Dreh- und/oder Steckverbindung.

15. Deckel nach einem der vorangehenden Ansprüche, **gekennzeichnet durch**
eine mit der ersten und/oder zweiten Pumpe (29, 49, 89), dem ersten, zweiten, dritten, vierten und/oder fünften Ventil (14, 18, 33, 65, 97, 99, 101, 103, 111), der Dampferzeugungseinheit (39), der Heißlufterzeugungseinheit (37), der Kippvorrichtung (27,61), der Verschwenkvorrichtung (9), der Dichtvorrichtung, der Verschlußvorrichtung (7), dem ersten, zweiten und/oder dritten Sensor (105, 107) und/oder zumindest einem vierten Sensor zur Erfassung der Temperatur des Deckels und/oder des Garbehälters in Wirkverbindung stehende Steuer- und/oder Regeleinheit.

16. Deckel nach einem der vorangehenden Ansprüche, **dadurch gekennzeichnet, daß** der Deckel (3) zumindest bereichsweise transparent ist.

17. Verfahren zum Reinigen eines Gargeräts mit einem Deckel nach einem der vorangehenden Ansprüche, umfassend folgende Schritte:
a) insbesondere dichtes, Verschließen des Garbehälters mittels des Deckels; und
b) Zuführen des ersten Fluids durch den Zulaufkanal in den Garbehälter und/oder Abführen des zweiten Fluids durch den Ablaufkanal aus dem Garbehälter.

18. Verfahren nach Anspruch 17, **dadurch gekennzeichnet, daß**,
insbesondere vor dem Verschließen des Garbehälters, das erste Fluid und/oder ein Reinigungs- und/oder Entkalkungsmittel, vorzugsweise in Tab-Form, dem Garbehälter zugeführt wird bzw. werden.

19. Verfahren nach Anspruch 17 oder 18, **dadurch gekennzeichnet, daß**
ein Reiniger, ein Klarspüler, ein Entkalker, ein Spülmittel und/oder Wasser, in Dampfform und/oder flüssig, als erstes Fluid ausgewählt wird bzw. werden, wobei das erste Fluid vorzugsweise unter Hochdruck zugeführt wird.

20. Verfahren nach einem der Ansprüche 17 bis 19, **dadurch gekennzeichnet, daß**
das zweite Fluid aus dem ersten Fluid und Schmutzpartikeln zusammengesetzt wird, wobei vorzugsweise der Verschmutzungsgrad des zweiten Fluids zum Steuern und/oder Regeln herangezogen wird.

21. Verfahren nach einem der Ansprüche 17 bis 20, **dadurch gekennzeichnet, daß**
das zweite Fluid aus dem Garbehälter durch den ersten und/oder zweiten Ablaufkanal, vorzugsweise mittels eines in dem Ablöschkasten, insbesondere durch Zufuhr von Wasser in den Ablöschkasten, erzeugten Unterdrucks, abgesaugt wird, und/oder der Ablauf des zweiten Fluids aus dem Garbehälter durch den ersten und/oder zweiten Ablaufkanal, insbesondere durch Kippen des Garbehälters, aufgrund der Gravitationskraft, unterstützt wird.

22. Verfahren nach einem der Ansprüche 17 bis 21, **gekennzeichnet durch**
mehrere Reinigungsphasen, wobei während einer Reinigungsphase der Zulaufkanal und der erste und/oder zweite Ablaufkanal miteinander verbunden werden, und das erste und/oder zweite Fluid mehrfach **durch** den Garbehälter umgewälzt wird bzw. werden, wobei die Dauer der Umwälzung, vorzugsweise in Abhängigkeit vom Verschmutzungsgrad des zweiten Fluids, gesteuert und/oder geregelt wird, und das zweite Fluid nach Öffnen des Kreislaufes entsorgt wird.

23. Verfahren nach Anspruch 22, **dadurch gekennzeichnet, daß**,
vorzugsweise vor der Reinigungsphase, in einer Erwännungsphase das erste und/oder zweite Fluid im Garbehälter, vorzugsweise durch Erwärmen des Garbehälters, erwärmt wird.

24. Verfahren nach Anspruch 21 oder 22, **gekennzeichnet durch**
zumindest eine Trocknungsphase, vorzugsweise nach der Reinigunsphase, wobei während der Trocknungsphase der Garbehälter erwärmt und/oder dem Garbehälter Heißluft zugeführt wird, so daß die im Garbehälter befindlichen Flüssigkeitsreste verdampft und **durch** den ersten und/oder zweiten Ablaufkanal abgeführt werden.

25. Verfahren nach einem der Ansprüche 17 bis 24, **dadurch gekennzeichnet, daß**
nach Auswahl eines Reinigungsprogrammes mit einer bestimmten Anzahl und Reihenfolge von Reinigungs-, Erwärmungs- und/oder Trocknungsphasen durch den Benutzer die Reinigung automatisch, gesteuert und/oder geregelt, vorzugsweise in Abhängigkeit von der Temperatur des ersten und/oder zweiten Fluids, des Garbehälters und/oder des Deckels und/oder des Verschmutzungsgrades des zweiten Fluids durchgeführt wird.

## Claims

1. Cover for a cooking appliance (1, 50) comprising a cooking vessel (5, 5', 59), in particular in the form of a pot, which can be at least partially closed by the cover (3, 51), at least one inlet duct (11, 53) for feeding at least a first fluid into the cooking vessel (5, 5', 59) and/or at least a first outlet duct (15) for removing at least a second fluid from the cooking vessel (5, 5', 59) extending at least partially in the cover (3, 51), **characterized by** a cleaning device which comprises the inlet duct (11, 53) and/or the first outlet duct (15).

2. Cover according to Claim 1, **characterized in that** the cleaning device comprises at least a second outlet duct (63) passing through the cooking vessel (59) for removing the second fluid from the cooking vessel (59).

3. Cover according to Claim 1 or 2, **characterized by** at least one duct closure piece (19, 23, 55) which can be connected, preferably via a snap-in, rotary and/or plug-in connection (20, 24), to the inlet duct (11, 53) and/or to the first and/or second outlet duct (15) on that side of the cover (3) facing the cooking vessel (5, 5').

4. Cover according to Claim 3, **characterized in that** the at least one duct closure piece comprises a tube, preferably curved in the form of a snorkel (23), at least one spray nozzle and/or a rotating or pivoting sprinkler (19, 55) which preferably comprises a plurality of spray nozzles (21) and is driven in particular by the first fluid flowing through the duct closure piece.

5. Cover according to one of the preceding claims, **characterized by** at least a first valve (14), which is preferably subject to open-loop and/or closed-loop control, in the inlet duct (11) and/or a second valve (18, 65) in the first and/or second outlet duct (15, 63).

6. Cover according to one of the preceding claims, **characterized in that** the cooking vessel (5, 5') has a depression in the region of the duct closure piece (23) which can be connected to the outlet duct (15).

7. Cover according to one of the preceding claims, **characterized by** at least one pivoting device (9), at least one sealing device and/or at least one closure device (7), preferably for closing the cover (3) on the cooking vessel (5, 5') in a leaktight manner.

8. Cover according to one of the preceding claims, **characterized by** a tilting device (27, 61) for tilting the cooking vessel (5, 5', 59), preferably automatically under open-loop and/or closed-loop control, so that at least the first and/or second outlet duct (15, 63) is or are arranged at the lowest point of the tilted cooking vessel (5, 5', 59).

9. Cover according to one of the preceding claims, **characterized by** at least a first pump, in particular a high-pressure pump (49), in operative connection with the inlet duct (11), and a steam-generating unit (39) and/or a hot air-generating unit (37).

10. Cover according to one of the preceding claims, **characterized by** at least a second pump (29, 89), in particular one which allows dirt to pass through, in operative connection with the first and/or second outlet duct (15, 63), the inlet duct (11, 53) and the first and/or second outlet duct (15, 63) are connected to one another, in particular via a third valve (33, 111), preferably with interposition of the pump (29, 89) and/or a first sensor for detecting the degree of soiling and/or temperature of the second fluid.

11. Cover according to one of the preceding claims, **characterized by** a quenching box (71) in communication with the second outlet duct (63), preferably with interposition of the second valve (65), the quenching box (71) preferably comprising a third outlet duct (81) which can be connected to the second pump (89).

12. Cover according to Claim 11, **characterized in that** the quenching box (71) comprises at least a first inlet (69) for the second fluid, at least a second sensor (105) for detecting the temperature within the quenching box (71), at least a third sensor (107) for detecting the fluid level in the quenching box (71), an overflow (83) and/or at least one filter device (79, 85) preferably arranged between the quenching box (71) and the second outlet duct (63) and/or in the region of the third outlet duct (81).

13. Cover according to Claim 11 or 12, **characterized in that** the quenching box (71) can be supplied, preferably under open-loop and/or closed-loop control, with at least a third fluid in the form of a liquid, such as fresh water, preferably via at least a fourth valve (101, 103), and/or with a fourth fluid in the form of a gas and/or steam, such as water vapour, preferably via at least a fifth valve (97, 99) and inlets (93, 95), and/or the quenching box (71) can be supplied with at least one tab comprising a cleaning agent and/or descaling agent, preferably via a sliding box.

14. Cover according to one of the preceding claims, **characterized by** at least a first reservoir for the first fluid and/or at least a second reservoir for the second fluid, it being possible for the first reservoir to be connected to the inlet duct (11) and the second reservoir to be connected to the first and/or second outlet duct (15), preferably via a snap-in, rotary and/or plug-in connection.

15. Cover according to one of the preceding claims, **characterized by** an open-loop and/or closed-loop control unit which is in operative connection with the first and/or second pump (29, 49, 89), the first, second, third, fourth and/or fifth valve (14, 18, 33, 65, 97, 99, 101, 103, 111), the steam-generating unit (39), the hot air-generating unit (37), the tilting device (27, 61), the pivoting device (9), the sealing device, the closure device (7), the first, second and/or third sensor (105, 107) and/or at least a fourth sensor for detecting the temperature of the cover and/or of the cooking vessel.

16. Cover according to one of the preceding claims, **characterized in that** the cover (3) is transparent at least in certain regions.

17. Method of cleaning a cooking appliance with a cover according to one of the preceding claims, comprising the steps which follow:
a) closing the cooking vessel by means of the cover particularly in a leaktight manner; and
b) feeding the first fluid through the inlet duct into the cooking vessel and/or removing the second fluid through the outlet duct from the cooking vessel.

18. Method according to Claim 17, **characterized in that** the first fluid and/or a cleaning agent and/or descaling agent, preferably in tab form, is or are supplied to the cooking vessel, particularly before the cooking vessel has been closed.

19. Method according to Claim 17 or 18, **characterized in that** a cleaner, a rinse aid, a descaler, a rinse agent and/or water, in steam form and/or liquid form, is or are selected as the first fluid, the first fluid preferably being fed in under high pressure.

20. Method according to one of Claims 17 to 19, **characterized in that** the second fluid is composed of the first fluid and dirt particles, the degree of soiling of the second fluid preferably being used for open-loop and/or closed-loop control purposes.

21. Method according to one of Claims 17 to 20, **characterized in that** the second fluid is extracted by suction from the cooking vessel through the first and/or second outlet duct, preferably by means of a negative pressure generated in the quenching box, in particular by feeding water into the quenching box, and/or the removal of the second fluid from the cooking vessel through the first and/or second outlet duct is assisted in particular by tilting the cooking vessel, by virtue of the gravitational force.

22. Method according to one of Claims 17 to 21, **characterized by** multiple cleaning phases, the inlet duct and the first and/or second outlet duct being connected to one another during a cleaning phase, and the first and/or second fluid being circulated a number of times through the cooking vessel, the duration of the circulation, preferably dependent on the degree of soiling of the second fluid, being subject to open-loop and/or closed-loop control, and the second fluid being disposed of after opening the circuit.

23. Method according to Claim 22, **characterized in that** the first and/or second fluid is or are heated in the cooking vessel, preferably by heating the cooking vessel, in a heating phase, preferably prior to the cleaning phase.

24. Method according to Claim 21 or 22, **characterized by** at least one drying phase, preferably after the cleaning phase, the cooking vessel being heated and/or hot air being supplied to the cooking vessel during the drying phase, so that the residual liquid situated in the cooking vessel is evaporated and removed through the first and/or second outlet duct.

25. Method according to one of Claims 17 to 24, **characterized in that** after the user has selected a cleaning programme with a certain number and sequence of cleaning, heating and/or drying phases, the cleaning is carried out automatically, with open-loop and/or closed-loop control, preferably as a function of the first and/or second fluid temperature, cooking vessel temperature and/or cover temperature and/or of the degree of soiling of the second fluid.

## Revendications

1. Couvercle pour un appareil de cuisson (1, 50), avec un récipient de cuisson (5, 5', 59) susceptible d'être obturé au moins partiellement par le couvercle (3, 51), récipient de cuisson ayant en particulier la forme d'un creuset, où, dans le couvercle (3, 51), s'étendent au moins partiellement au moins un canal d'amenée (11, 53), servant à l'amenée d'au moins un premier fluide dans le récipient de cuisson (5, 5', 56), et/ou au moins un premier canal d'évacuation (15), servant à l'évacuation d'au moins un deuxième fluide hors du récipient de cuisson (5, 5', 59), **caractérisé par**
un dispositif de nettoyage comprenant le canal d'amenée (11, 53) et/ou le premier canal d'évacuation (15).

2. Couvercle selon la revendication 1, **caractérisé en ce que** le dispositif de nettoyage comprend au moins un deuxième canal d'évacuation (63) passant à travers le récipient de cuisson (59), afin d'évacuer le deuxième fluide hors du récipient de cuisson (59).

3. Couvercle selon la revendication 1 ou 2, **caractérisé par** au moins une pièce de fermeture de canal (19, 23, 55) susceptible d'être reliée au canal d'amenée (11, 53) et/ou au premier et/ou au deuxième canal d'évacuation (15) sur le côté, tourné vers le récipient de cuisson (5, 5'), du couvercle (3), la liaison se faisant de préférence par l'intermédiaire d'une liaison à encliquetage, à rotation et/ou à enfichage (20, 24).

4. Couvercle selon la revendication 3, **caractérisé en ce qu'**au moins une pièce de fermeture de canal comprend un tube, de préférence incurvé à la forme d'un renifleur (23), au moins une buse de pulvérisation et/ou un pulvérisateur rotatif ou pivotant, comprenant de préférence plusieurs buses de pulvérisation (21), en particulier entraînées au moyen du premier fluide passant par la pièce de fermeture de canal.

5. Couvercle selon l'une des revendications précédentes, **caractérisé par** au moins une première soupape (14), de préférence susceptible d'être commandée et/ou régulée, placée dans le canal d'amenée (11), et/ou une deuxième soupape (18, 65), placée dans le premier et/ou le deuxième canal d'évacuation (15, 63).

6. Couvercle selon l'une des revendications précédentes, **caractérisé en ce que** le récipient de cuisson (5, 5') présente un creusement dans la zone de la pièce de fermeture de canal (23) susceptible d'être reliée au canal d'évacuation (15).

7. Couvercle selon l'une des revendications précédentes, **caractérisé par** au moins un dispositif de pivotement (9), au moins un dispositif d'étanchéité et/ou au moins un dispositif de fermeture (7), de préférence pour refermer de façon étanche le couvercle (3) sur le récipient de cuisson (5, 5').

8. Couvercle selon l'une des revendications précédentes, **caractérisé par** un dispositif de basculement (27, 61) pour produire le basculement, de préférence automatique, avec possibilité de commande et/ou de régulation, du récipient de cuisson (5, 5', 59), de manière qu'au moins le premier et/ou le deuxième canal d'évacuation (15, 63) soit, respectivement soient, disposé(s) au point le plus bas du récipient de cuisson (5, 5', 59) ayant été basculé.

9. Couvercle selon l'une des revendications précédentes, **caractérisé par** au moins une première pompe, en particulier une pompe à haute pression (49), mise en liaison fonctionnelle avec le canal d'amenée (11), une unité de génération de vapeur (39) et/ou une unité de génération d'air chaud (37).

10. Couvercle selon l'une des revendications précédentes, **caractérisé par** au moins une deuxième pompe (29, 89), en particulier permettant un passage de souillures, placée en liaison fonctionnelle avec le premier et/ou le deuxième canal d'évacuation (15, 63), le canal d'amenée (11, 53) et le premier et/ou le deuxième canal d'évacuation (15, 63) étant susceptible(s) être relié(s) ensemble, en particulier, par l'intermédiaire d'une troisième soupape (33, 111), de préférence avec interposition de la pompe (29, 89) et/ou d'un premier capteur pour détecter le degré de souillure et/ou la température du deuxième fluide.

11. Couvercle selon l'une des revendications précédentes, **caractérisé par** un caisson d'extinction (71) mis en liaison avec le premier et/ou le deuxième canal d'évacuation (63), de préférence avec interposition de la deuxième soupape (65), le caisson d'extinction (71) présentant de préférence un troisième canal d'évacuation (81) susceptible d'être relié à la deuxième pompe (89).

12. Couvercle selon la revendication 11, **caractérisé en ce que** le caisson d'extinction (71) comprend au moins une première amenée (69) pour le deuxième fluide, au moins un deuxième capteur (105) pour détecter la température à l'intérieur du caisson d'extinction (71), au moins un troisième capteur (107) pour détecter le niveau de fluide dans le caisson d'extinction (71), un trop-plein (83) et/ou au moins un dispositif de filtrage (79, 85), disposé de préférence entre le caisson d'extinction (71) et le deuxième canal d'évacuation (63) et/ou dans la zone du troisième canal d'évacuation (81).

13. Couvercle selon la revendication 11 ou 12, **caractérisé en ce que**, au caisson d'extinction (71) est susceptible d'être amené, de préférence de façon commandée et/ou régulée, au moins un troisième fluide ayant la forme d'un liquide, tel que de l'eau neuve, par l'intermédiaire de préférence d'au moins une quatrième soupape (101, 103), et/ou un quatrième fluide, ayant la forme d'un gaz et/ou d'une vapeur, telle que de la vapeur d'eau, par l'intermédiaire de préférence d'au moins une cinquième soupape (97, 99) et des amenées (93, 95), et/ou au caisson d'extinction (71) est susceptible d'être amenée au moins une pastille, comprenant un produit de nettoyage et/ou de détartrage, de préférence par l'intermédiaire d'un caisson coulissant ou tiroir.

14. Couvercle selon l'une des revendications précédentes, **caractérisé par** au moins un premier réservoir pour le premier fluide et/ou au moins un deuxième réservoir pour le deuxième fluide, le premier réservoir étant susceptible d'être relié au canal d'amenée (11) et le deuxième réservoir étant susceptible d'être relié au premier et/ou au deuxième canal d'évacuation (15), de préférence par l'intermédiaire d'une liaison à encliquetage, à rotation et/ou à enfichage.

15. Couvercle selon l'une des revendications précédentes, **caractérisé par** une unité de commande et/ou de régulation, mise en liaison fonctionnelle avec la première et/ou la deuxième pompe (29, 49, 89), la première, la deuxième, la troisième, la quatrième et/ou la cinquième soupapes (14, 18, 33, 65, 97, 99, 101, 103, 111), l'unité de génération de vapeur (39), l'unité de génération d'air chaud (37), le dispositif de basculement (27, 61), le dispositif de pivotement (9), le dispositif d'étanchéité, le dispositif de fermeture (7), le premier, le deuxième et/ou le troisième capteurs (105, 107) et/ou au moins un quatrième capteur, pour détecter la température du couvercle et/ou du récipient de cuisson.

16. Couvercle selon l'une des revendications précédentes, **caractérisé en ce que** le couvercle (3) est transparent, au moins par zones.

17. Procédé de nettoyage d'un appareil de cuisson avec un couvercle selon l'une des revendications précédentes, comprenant les étapes suivantes :
a) fermeture, en particulier étanche, du récipient de cuisson à l'aide du couvercle ; et
b) amenée du premier fluide par le canal d'amenée dans le récipient de cuisson et/ou évacuation du deuxième fluide par le canal d'évacuation, hors du récipient de cuisson.

18. Procédé selon la revendication 17, **caractérisé en ce que**, en particulier avant fermeture du récipient de cuisson, le premier fluide et/ou un produit de nettoyage et/ou de détartrage, de préférence se présentant sous forme de pastille, est ou, respectivement, sont amené(s) au récipient de cuisson.

19. Procédé selon la revendication 17 ou 18, **caractérisé en ce qu'**un produit de nettoyage, un produit de clarification, un détartrant, un produit de rinçage et/ou de l'eau, est ou sont sélectionné(s) comme premier fluide, sous forme de vapeur et/ou liquide, le premier fluide étant de préférence amené sous pression.

20. Procédé selon l'une des revendications 17 à 19, **caractérisé en ce que** le deuxième fluide est composé du premier fluide et de particules de souillures, sachant que, de préférence, le degré de souillure du deuxième fluide est utilisé pour la commande et/ou la régulation.

21. Procédé selon l'une des revendications 17 à 20, **caractérisé en ce que** le deuxième fluide est aspiré du récipient de cuisson par le premier et/ou le deuxième canal d'évacuation, de préférence en utilisant une pression négative produite dans le caisson d'extinction, en particulier par apport d'eau dans le caisson d'extinction, et/ou l'évacuation du deuxième fluide hors du récipient de cuisson, par le premier et/ou le deuxième canal d'évacuation, étant favorisée, en particulier par un basculement du récipient de cuisson, du fait de la force de gravitation.

22. Procédé selon l'une des revendications 17 à 21, **caractérisé par** plusieurs phases de nettoyage, sachant que, pendant une phase de nettoyage, le canal d'amenée et le premier et/ou le deuxième canal d'évacuation sont reliés ensemble, et le premier et/ou le deuxième fluide est, respectivement sont, mis en circulation plusieurs fois en traversant le récipient de cuisson, la durée de la circulation étant commandée et/ou régulée, de préférence en fonction du degré de souillure du deuxième fluide, et le deuxième fluide étant évacué après ouverture du circuit.

23. Procédé selon la revendication 22, **caractérisé en ce que**, de préférence avant la phase de nettoyage, lors d'une phase de chauffage, le premier et/ou le deuxième fluide sont chauffés dans le récipient de cuisson, de préférence par chauffage du récipient de cuisson.

24. Procédé selon la revendication 21 ou 22, **caractérisé par** au moins une phase de séchage, de préférence après la phase de nettoyage, sachant que, pendant la phase de séchage, le récipient de cuisson est chauffé et/ou de l'air chaud est amené au récipient de cuisson, faisant que les restes de liquide se trouvant dans le récipient de cuisson sont évaporés et évacués par le premier et/ou le deuxième canal d'évacuation.

25. Procédé selon l'une des revendications 17 à 24, **caractérisé en ce que**, après sélection d'un programme de nettoyage, avec un nombre et un ordre de succession déterminés des phases de nettoyage, chauffage et/ou de séchage, par l'utilisateur, le nettoyage est effectué automatiquement et/ou régulé, de préférence en fonction de la température du premier et/ou du deuxième fluide, du récipient de cuisson et/ou du couvercle et/ou du degré de souillure du deuxième fluide.
